# EUROPEAN PATENT APPLICATION

(11) **EP 1 551 024 A2**
(43) Date of publication of application: **06.07.2005**
(21) Application number: 04030967.6
(22) Date of filing: 29.12.2004
(51) Int. Cl.: G11B 20/10, G06F 3/06

(54) **File access method for a storage medium in a wireless terminal**

(30) Priority: 30.12.2003 KR 2003100233; 26.03.2004 KR 2004020793; 13.12.2004 KR 2004104994
(71) Applicant: Samsung Electronics Co., Ltd., Suwon-city, Gyeonggi-do (KR)
(72) Inventor: Park, Seok-Hyo, Yeongtong-gu, Suwon-si, Gyeonggi-do (KR); Ryu, Yeong-Moo, Yeongtong-gu, Suwon-si, Gyeonggi-do (KR); Kim, Hark-Sang, Yeongtong-gu, Suwon-si, Gyeonggi-do (KR); Park, Tae-Won, Yeongtong-gu, Suwon-si, Gyeonggi-do (KR); Suh, Byung-Hwan, Yeongtong-gu, Suwon-si, Gyeonggi-do (KR)
(74) Representative: Lang, Johannes, Dipl.-Ing.

(57) **Abstract**

A method of accessing and processing a file stored in a sub-memory (135) of a portable terminal (Fig.1) including the sub-memory (135) and an internal memory (133) capable of storing mass storage data. The method includes storing a file system menu of the sub-memory in the internal memory (315) during a boot-up operation (313), displaying the file system menu when shifting into a file access mode for the sub-memory from a waiting mode, accessing file data selected from the file system menu and buffering the file data in the buffer of the internal memory (411,613) until the file data have a size corresponding to a predetermined upper limit value (413,615), processing the buffered file data (617), buffering data of the sub-memory in the buffer (423) until the data have a size corresponding to the upper limit value (427) when a quantity of buffered data becomes lower than a predetermined lower limit value (417) while processing the buffered file data, and repeating data processing and buffering procedures until a closing command is generated (419,429,625).

## Description

### BACKGROUND OF THE INVENTION

### Field of the Invention

The present invention relates to a method for processing data in a portable terminal. More particularly, the present invention relates to a method for processing data by accessing the data from an external memory in a portable terminal having a sub-memory.

### Description of the Related Art

A portable terminal is a device that provides wireless communication with a base station. A main function of the portable terminal is a telephone function. Recently, the portable terminal has become equipped with various sub-functions in addition to the telephone function in order to process multimedia information. That is, the portable terminal is equipped with a camera so as to process image data and has sub-functions, such as a music file processing function and an electronic dictionary function. In order to achieve the multimedia function, the portable terminal must be provided with a mass storage memory. That is, the portable must have the mass storage memory in order to store music and photo image (dynamic image and still image) data therein.

The portable terminal equipped with a multimedia function requires the mass storage memory in order to store multimedia data therein. To this end, the portable terminal has a sub-memory in order to store multimedia data in the portable terminal. Herein, the sub-memory may include a memory unit or a disc unit. The disc unit includes a hard disc and an optical disc. In addition, the optical disc includes a write once read many (WORM) optical disc, such as a compact disk (CD) or a digital video disk (DVD).

If the disc unit is used as a sub-memory of the portable terminal, mass storage data are stored in the disc unit, so a method for accessing information in the disc unit is necessary. In addition, the disc unit must be driven in order to allow a user to access data stored in the disc unit. Therefore, it is preferred that power consumption is reduced when driving the disc unit.

### SUMMARY OF THE INVENTION

Accordingly, the present invention has been made to solve the above-mentioned problems occurring in the prior art, and an object of the present invention is to provide a method for storing a file system menu and a data file of a sub-memory in a memory in order to perform corresponding functions in a portable terminal having the sub-memory.

Another object of the present invention is to provide a method for storing a file system menu of a sub-memory in a memory and for directly accessing a data file of the sub-memory while buffering data in a proper size.

In order to accomplish the above objects, according to one aspect of the present invention, there is provided a method of accessing and processing a file stored in a sub-memory of a portable terminal including the sub-memory and an internal memory capable of storing mass storage data in which the internal memory has a buffer for accessing and buffering the file selected from the sub-memory. The method comprises storing a file system menu of the sub-memory in the internal memory during a boot-up operation; displaying the file system menu stored in the internal memory when shifting into a file access mode for the sub-memory from a waiting mode; accessing file data selected from the file system menu of the sub-memory and buffering the file data in the buffer of the internal memory until the file data have a size corresponding to a predetermined upper limit value; processing the buffered file data; buffering data of the sub-memory in the buffer until the data have a size corresponding to the upper limit value when a quantity of buffered data becomes lower than a predetermined lower limit value while processing the buffered file data; and repeating data processing and buffering procedures until a closing command is generated.

In order to accomplish the above objects, according to another aspect of the present invention, there is provided a method of storing data in a portable terminal including a sub-memory and a main memory capable of storing mass storage data in which the main memory has a buffer area including a plurality of blocks. The method comprises assigning the buffer area to the main memory in a data storage mode; processing input data and buffering the processed data until the data have buffered corresponding to an upper limit value for the buffer area of the main memory; driving a file system when the data have buffered corresponding to the upper limit value of the buffer area, buffering the processed data in a next block of the buffer area, selecting a block of the buffer area, in which the data are primarily buffered, by means of the file system, and storing the data being buffered in the selected block in the sub-memory; and repeating the above steps until a closing command is generated.

In order to accomplish the above objects, according to still another aspect of the present invention, there is provided a method of storing data in a portable terminal including a sub-memory and a main memory capable of storing mass storage data in which the main memory has a buffer area including a plurality of blocks. The method comprises displaying files stored in the sub-memory in a data reproduction mode and assigning the buffer area to the main memory when a file is selected from the files; driving a file system so as to access data stored in the sub-memory, buffering the data until the data have buffered corresponding to an upper limit value for the buffer area of the main memory, and buffering data of a next block of the buffer area by accessing the next block of the sub-memory by means of the file system; and repeating the above steps until a closing command is generated.

### BRIEF DESCRIPTION OF THE DRAWINGS

The above and other objects, features and advantages of the present invention will be more apparent from the following detailed description taken in conjunction with the accompanying drawings, in which:
FIG. 1 is a view illustrating a structure of a portable terminal according to an embodiment of the present invention;
FIGS. 2A and 2B are views illustrating the relationship between a second controller and a sub-memory shown in FIG. 1;
FIG. 3 is a flowchart illustrating a procedure for accessing data of a sub-memory by means of a second controller according to an embodiment of the present invention;
FIG. 4 is a flowchart illustrating a procedure for processing data of the sub-memory according to an embodiment of the present invention;
FIG. 5 is a flowchart illustrating a recording procedure of a portable terminal according to a second embodiment of the present invention;
FIG. 6 is a flowchart illustrating a procedure for storing data in a sub-memory after the data have been buffered in a file system according to an embodiment of the present invention;
FIG. 7 is a flowchart illustrating a reproducing procedure of a portable terminal according to a second embodiment of the present invention; and
FIG. 8 is a flowchart illustrating a procedure for buffering data of a sub-memory in a main memory in a file system.

### DETAILED DESCRIPTION OF THE PREFERRED EMBODIMENTS

Hereinafter, embodiments of the present invention will be described with reference to the accompanying drawings.

The present invention relates to a method of reproducing data stored in a disc unit by effectively accessing the data in a portable terminal having the disc unit as a sub-memory. To this end, according to an embodiment of the present invention, a selected data file is read from the sub-memory when accessing the data stored in the sub-memory and the selected data file is buffered in a memory. In addition, a function of the selected data file is rapidly processed while accessing the data file stored in the memory. If the data file has a size larger than a buffer size assigned to the memory, the function of the selected data file is performed while repeatedly conducting a buffering action according to the buffer size of the memory. In addition, when directly accessing the sub-memory in a portable terminal having the sub-memory, the portable terminal accesses data in a predetermined unit according to the buffer size of an internal memory of a controller and buffers the data in the memory of the portable terminal.

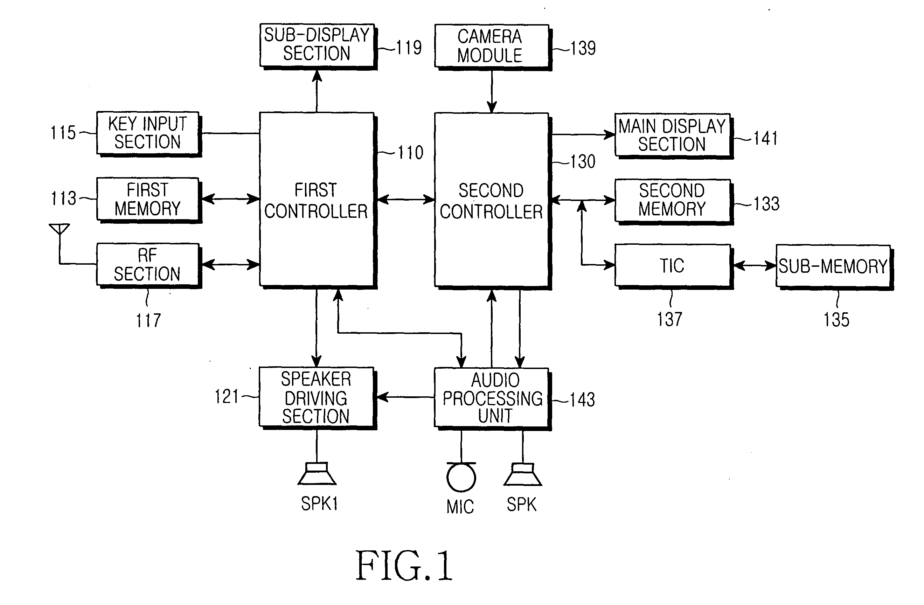

FIG. 1 is a view illustrating a structure of a portable terminal according to an embodiment of the present invention.

Referring to FIG. 1, a radio frequency (RF) section 117 performs a wireless communication function. The RF section 117 includes an RF transmitter (not shown) for up-converting and amplifying a frequency of a transmitted signal and an RF receiver (not shown) for low-noise amplifying and down-converting a frequency of a received signal.

A first controller 110 includes a transmitter (not shown) for coding or modulating the transmitted signal and a receiver (not shown) for decoding and demodulating the received signal. That is, the first controller 110 includes a MODEM and a CODEC. Herein, the CODEC includes a data CODEC for processing packet data, and the like, as well as an audio CODEC for processing audio signals, such as a voice signal. An audio processing unit 143 reproduces audio signals output from the audio CODEC of the first controller 110 or transmits audio signals generated from a microphone to the audio CODEC.

A key input section 115 includes input keys for inputting numbers and character information and various function keys for setting various functions. In addition, the key input section 115 may include various function keys for accessing information of a sub-memory according to one embodiment of the present invention.

A first memory 113 includes a program memory and a data memory. The program memory stores programs for processing a call of the portable terminal and programs for controlling an operation of the portable terminal. In addition, the data memory stores data (for example, a phone book) related to the call function of the portable terminal and temporarily stores data generated while executing the programs.

A sub-display section 119 displays general state information (time, and so on) of the portable terminal under the control of the first controller 110 and displays an incoming call. A speaker driving section 121 may generate an alarm signal upon receiving an incoming call or may process an audio signal of an external speaker.

In order to process a telephone function of the portable terminal having the above structure, the first controller 110 controls an operation of the portable terminal. In addition, although an embodiment of the present invention is described on the assumption that the first controller 110 includes the CODEC and the MODEM, it is also possible to separately form a data processing unit including the CODEC and the MODEM. In this case, the first controller 110 controls general functions of the portable terminal.

A camera module 139 includes a camera sensor for converting an optical signal detected when photographing an image into an electrical signal, and a signal processing unit for converting an analog signal of the camera sensor into a digital data. Herein, the camera sensor includes a Charge Coupled Device (CCD) sensor and the signal processing unit includes a digital signal processor (DSP). In addition, the camera sensor can be integrally formed with the signal processing unit or separately formed from the signal processing unit.

A second controller 130 generates screen data required for displaying an image signal output from the camera module 139 and processes music files. That is, the second controller 130 is a multimedia controller for processing image and music files. In this case, the second controller 130 may be operated under the control of the first controller 110. That is, when the portable terminal performs the telephone function in a communication mode, the first controller 110 is operated so as to control the operation of the portable terminal. In addition, when the multimedia function is selected in a waiting mode, the first controller 110 detects it and provides control to the second controller 130.

A second memory 133 is used for storing multimedia data such as image and music files. In addition, the second memory 133 includes a buffer area for temporarily storing data of a sub-memory 135. The second memory 133 includes a flash memory or an Synchronized Dynamic Random Access Memory (SDRAM). Herein, a part of the flash memory is assigned as the buffer area of the second memory.

The sub-memory 135 is an external memory, such as a disc. The disc includes an optical disc or a hard disc. In a case of the optical disc, a CD or a DVD is used. In addition, the disc may include a pickup unit. A Transition Integrated Circuit (TIC) 137 is a device used when the second controller 130 supports I/O and a memory interface and the sub-memory 135 supports only an Integrated Drive Electronics (IDE) mode. That is, the TIC 137 supports a true IDE mode in such a manner that the second controller 130 is interfaced with the sub-memory 135.

The second memory 133 operates as a main memory of the sub-memory 135. In addition, the main memory can be used as a work memory of the second controller 130. Therefore, in the following description, the second memory 133 will be referred to as the main memory or the second memory.

A main display section 141 displays information related to communication under the control of the first controller 110 in a communication mode, and displays multimedia information under the control of the second controller 130 in a waiting mode. The main display section 141 includes a liquid crystal display (LCD). In this case, the main display section 141 has a LCD controller, a memory capable of storing image data, and a LCD device. Herein, if the LCD is embodied as a touch screen type LCD, the LCD may act as an input section.

An audio processing unit 143 includes a CODEC and a MODEM for processing audio data such as music files. Herein, the audio processing unit 143 can process MP3 music files.

Referring again to FIG. 1, when transmitting an outgoing call by using the portable terminal, a user performs a dialing operation through the key input section 115, and the first controller 110 detects the dialing operation. Thus, the first controller 110 processes dial information and outputs an RF signal through the RF section 117. Then, if a recipient responds to the outgoing call, the first controller 110 detects it through the RF section 117. Thus, the controller 110 forms a communication path including the RF section 117 and the audio processing unit 119 so as to allow the user to make communication with the recipient. In addition, when an incoming call is received in the portable terminal, the first controller 110 detects the incoming call and sounds an alarm for the incoming call while displaying information of a transmitter in the main display section 141. If the user responds to the incoming call, the first controller 110 detects it and provides an incoming call service. In addition, the first controller 110 may provide a character communication service, such as an Short Messaging Service (SMS), in addition to a voice communication service. Data processed during the communication mode of the portable terminal can be displayed on the main display section 141 by means of the second controller 130.

In the waiting mode, the state of the portable terminal is displayed in the main display section 141 of the first and second controllers 110 and 130. In the waiting mode, multimedia data are processed under the control of the second controller 130. According to an embodiment of the present invention, key data generated during the waiting mode through the key input section 115 are input into the second controller 130 through the first controller 110. In addition, audio signals generated when processing multimedia data are processed by means of the second controller 130 and reproduced through the audio processing unit 143. Image data generated when processing the multimedia data during the waiting mode are displayed in the main display section 141 under the control of the second controller 130. If the second controller 130 has a function of processing the key input and the voice signal, the second controller can directly process the key input and the voice signal regardless of the first controller 110.

In a case of image data, still image data may be processed through a Joint Picture Experts Group (JPEG) coding scheme and a moving image data may be processed through a Moving Picture Experts Group (MPEG) coding scheme. Accordingly, the second controller 130 has a JPEG CODEC and an MPEG CODEC so as to process the image data. In general, music files are processed through an MP3 coding scheme. Therefore, the audio processing unit 143 has an MP3 CODEC so as to process music files. Besides the above coding schemes, the second controller 130 may include proper CODECs so as to process multimedia data.

When a photographing mode is selected, the first controller 110 notifies the second controller 130 of the photographing mode, so the second controller 130 drives the camera module 139 in order to obtain image data. The image data are processed through the second controller 130 and stored in the second memory 133 and the sub-memory 135. In addition, when reproducing the image data stored in the sub-memory 135, the second controller 130 accesses selected image data and processes the selected image data, thereby displaying the selected data in the main display section 141. When a reproduction of the music file is selected, the second controller 130 accesses the music file and reproduces the music file through the audio processing unit 143.

At this time, since the image and music files include data of large sizes, the sub-memory 135 is additionally used. The sub-memory 135 can store data having sizes of hundreds of MEGA or a few GIGA. When accessing data stored in the sub-memory 135, the second controller 130 can store data of the sub-memory 135 in the buffer area of the second memory 133. Herein, the buffer area has a predetermined size (for instance, 2 MEGA to 64 MEGA).

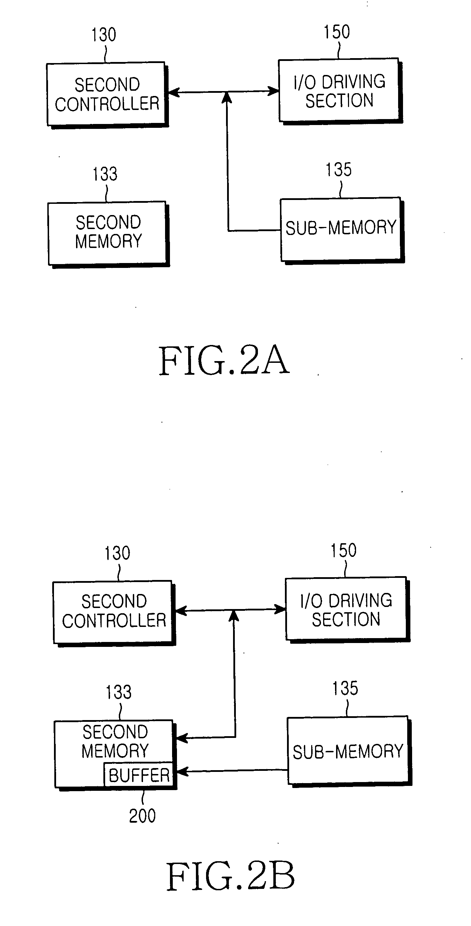

FIGS. 2A and 2B are views illustrating the second controller 130 for accessing data of the sub-memory 135.

FIG. 2A illustrates a direct hard disk drive (HDD) access structure for accessing the data files stored in the sub-memory 135, and FIG. 2B illustrates a data access structure including a buffer area. As shown in FIG. 2A, when the second controller 130 directly accesses data stored in the sub-memory 135, a time for driving the sub-memory 135 (disc) is necessary. That is, the second controller 130 may access the data files stored in the sub-memory 135 while driving a driving section for the sub-memory 135. At this time, since the sub-memory 135 has a disc structure, the second controller 130 must operate the disc driving unit for driving the sub-memory, that is, the disc. At this time, a time required for accessing the data by driving the disc driving unit is about a few seconds (for example, about ten seconds). Therefore, when accessing the data files stored in the sub-memory 135, the second controller 130 accesses a data file having a predetermined size and processes the data file. Then the second controller 130 again drives the sub-memory 135 so as to access the data file. In this case, a data process step must be stopped corresponding to the driving time for the sub-memory 135 when the second controller accesses the data.

To this end, according to an embodiment of the present invention, a buffer area is assigned in the second memory 135 as shown in FIG. 2B. In addition, the second controller 130 sets an upper limit value and a lower limit value of the buffer area so as to control the operation of the driving section in such a manner that a buffering operation can be stopped when data buffered in the buffer area exceeds the upper limit value and the buffering operation can be started when the data buffered in the buffer area reach the lower limit value. That is, when the second controller 130 stores the data in the buffer area of the second memory 133 by accessing the data stored in the sub-memory 135, the access operation may be stopped when the buffer area enters a full-state, and the access operation may be restarted when the buffer area enters an empty state. The above operation is repeatedly performed so that the driving unit for the sub-memory 135 can be intermittently driven, thereby saving power consumption of the portable terminal. In addition, since the second controller 130 can stably access the data stored in the sub-memory 135, reliability of the data process can be improved.

The sub-memory 135 may comprise a file system. In such a file system, the electronic dictionary, music and image files may be assigned with their own names and positions of the files can be allocated for the purpose of storing and searching. DOS, WINDOW, OS/2, Macintosh, and Unix based operating systems have file systems in which files are positioned in a layered structure. The files are placed in directories (or folders) or sub-directories of the layered structure. The file systems have a rule for assigning names to files. The rule may include a limitation for the length of the file name, and the type of characters used for the file. Some such file systems may limit lengths of file name extensions. The file system includes a scheme for setting a route to access the files through the directory structure.

In addition, IDE is a standard electronic interface used between a data bus of a mother board and a computer disc unit. The sub-memory 135 is provided with the IDE interface and the second controller 130 is interfaced into an I/O mode, a memory mode, and an IDE mode. Accordingly, if the sub-memory 135 supports the IDE interface function and the second controller 130 supports interface functions for the I/O mode, the memory mode, and the IDE mode, the TIC 137 cannot be used. In this case, the second controller 130 may directly access the data stored in the sub-memory 135. However, if the sub-memory 135 supports the IDE interface function and the second controller 130 supports ) interface functions for the I/O mode and the memory mode, the second controller 130 cannot directly access the sub-memory 135. Accordingly, as shown in FIG. 1, the TIC (transition IC) 137 is provided between the second controller 130 and the sub-memory 135 for the purpose of the IDE interface. In this case, the second controller 130 may access the sub-memory 135 in the I/O mode or the memory mode. In addition, the TIC 137 is interfaced with the sub-memory 135 through the IDE interface, so that data interfaced in the IDE mode are converted through an interface scheme of the second controller 130 and transferred to the second controller 130.

According to one embodiment of the present invention, when the second ) controller 130 accesses the sub-memory 135, data stored in the sub-memory 135 are processed by buffering the data in the buffer area of the second memory 133. As mentioned above, the portable terminal equipped with the multimedia function requires a mass storage medium. Thus, such buffering work for the data is necessary in order to minimize a driving time for the sub-memory 135, thereby reducing power consumption. In addition, since the sub-memory 135 is a disc unit, the sub-memory 135 is susceptible to vibrations caused by an impact applied thereto. Furthermore, external impact may be frequently applied to the portable terminal due to the mobility of the portable terminal. At this time, if the external impact is applied to the portable terminal while the disc is being driven, the disc driving unit may malfunction. Therefore, when a user requests an access to the sub-memory 135, it is preferred to perform the access to the sub-memory 135 after the portable terminal has been placed in a stable position.

In addition, if the sub-memory 135 is the optical disc, data may be recorded in the sub-memory 135 only once, and the stored data can be permanently reproduced. In addition, if the sub-memory 135 is the hard disc, data may be freely recorded in and reproduced from the sub-memory 135. An embodiment of the present invention will be described in relation to the procedure for reproducing data recorded in the sub-memory 135. The method for accessing the sub-memory 135 according to an embodiment of the present invention can be utilized when recording the data in the sub-memory 135. That is, when recording the data in the sub-memory 135, data to be recorded are buffered in the second memory 133, and the data buffered in the second memory 133 are recorded in the sub-memory 135.

According to one embodiment of the present invention, reference values for controlling the sub-memory 135 are set by analyzing a quantity of data stored in the buffer area of the second memory 133. That is, if the electronic function is selected, the second controller 130 reads the electronic dictionary data files stored in the sub-memory 135 and buffers the electronic dictionary data files in the buffer area of the second memory 133 in such a manner that the electronic dictionary function is performed when the user requests it. In this case, the second controller 130 stores the electronic dictionary data files of the sub-memory 135 in the buffer area of the second memory 133 once, and then, the second controller 130 does not access the sub-memory 135.

However, when accessing a mass storage data file, such as a music file, an access action to the sub-memory 135 can be controlled while analyzing data stored in the buffer area of the second memory 133. To this end, according to an embodiment of the present invention, a lower limit value for driving the sub-memory 135 and an upper limit value for stopping the sub-memory 135 being driven are previously set. For example, in a case of an MP3, one song generally has a size of 4M with a running time of about 4minutes. At this time, if the buffer area of the second memory 13 has a capacity of 32M, the upper and lower limit values are set to 28M and 4M, respectively. In this case, the second controller 130 drives the driving section until data of 28M have been buffered in the buffer area of the second memory while accessing the data in the sub-memory 135. After that, the operation of the driving section is stopped until capacity of the data buffered in the buffer area becomes reduced to 4M. When the capacity of the data buffered in the buffer area becomes less than 4M, the driving section is driven again.

Herein, the upper and lower limit values of the second memory 133 are set with respect to all multimedia data. In addition, the reproducing time thereof may vary depending on the sort of multimedia data, and sampling rates and compression rates used in the coding operation. That is, the reproducing time for the MP3 music file may be longer than the reproducing time for the MPEG file. In addition, the reproducing time may be extended if the sampling rate and the number of quantizing bits become reduced. Accordingly, if the multimedia data are moving picture files, the lower limit value is set to a higher level. In addition, the lower limit value increases as the sampling rate and the number of quantizing bits become increased.

When the multimedia reproduction is started upon a request of the user, the second memory 110 buffers the data stored in the sub-memory 135 in the buffer area of the second memory 133. When buffering the data in the buffer area of the second memory 133, the buffer area is completely filled with the data for the purpose of the reproduction operation. However, it is also possible to primarily buffer data having a predetermined size in the buffer area and secondarily buffer data in the buffer area while performing the reproduction operation.

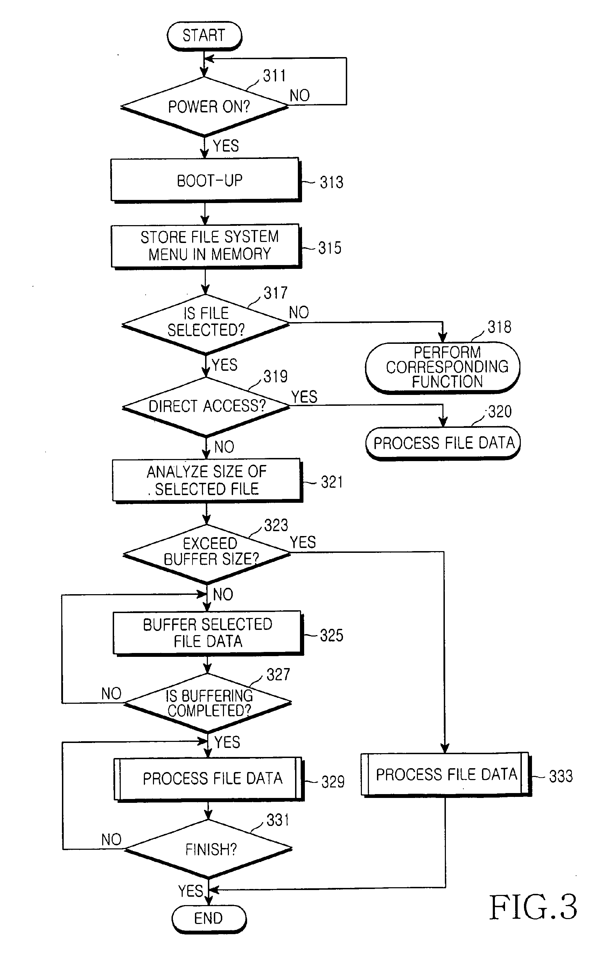

FIG. 3 is a flowchart illustrating a procedure for accessing data of the sub-memory 135 by means of the second controller 130 according to one embodiment of the present invention.

Referring to FIG. 3, when the portable terminal is powered on, the first controller 110 initializes the portable terminal. The first controller 110 then notifies the second controller 130 of the power-on state. Then, the second controller 130 detects the power on state at step 311 so that the second controller 130 performs a boot-up operation for initializing the portable terminal in order to process the multimedia data at step 313. In addition, the second controller 130 reads the menu of the file system in the sub-memory 135 and stores it in the second memory 133 at step 315. The menu of the file system includes a list of the data files stored in the sub-memory 135 and size information of each data file. In this state, the second controller 130 can process the multimedia data while in the waiting mode so that the second controller 130 displays data, which are applied thereto from the first controller 110 while in a call process mode, in the main display section 141.

During the waiting mode, the user can select a reproduction function of the sub-memory 135 though the key input section 115. The second controller 130 displays the file system menu stored in the sub-memory 135 in the main display section 141. In addition, if the user selects a predetermined file from file names of the sub-memory 135 displayed in the main display section 141, the second controller 130 accesses and processes the corresponding file stored in the sub-memory 135. If the user selects the file stored in the sub-memory 135, the second controller 130 detects the selection at step 317 and checks whether it is necessary to directly access the data file at step 319. If the user does not select the file stored in the sub-memory 135, other corresponding functions are performed at step 318. In a direct disc access mode the second controller 130 accesses and processes the data file stored in the sub-memory 135 at step 320 without performing the buffering operation as shown in FIG. 2A. That is, upon detecting the direct disc access mode, the second controller 130 directly accesses and processes the data file stored in the sub-memory 135.

If the mode is not the direct disc access mode, the second controller 130 analyzes the size of the data file selected from the sub-memory 135 at step 321, and checks whether the size of the selected data file is larger than the buffer size assigned to the second memory 133 at step 323. If the size of the selected data file is equal to or smaller than the buffer size assigned to the second memory 133, the second controller 130 drives the sub-memory 135 so as to access the selected file and store the selected file in the buffer area of the second memory 133 at step 325. If the selected file has been stored in the buffer area of the second memory 133, the second controller 130 detects it in step 327 and processes the file stored in the buffer area of the second memory 133 in step 329. In addition, if the data file has been completely processed or the user generates a file process completion signal, the second controller 130 detects it in step 331 and finishes the file process operation.

Such an operation may be performed when the file size of the sub-memory 135 selected by the user does not exceed the buffer size of the second memory 133. For example, the above operation may be carried out when processing the electronic dictionary. That is, if the user selects the electronic dictionary function stored in the sub-memory 135, the second controller 130 analyzes the size of the electronic dictionary file stored in the sub-memory 135 and stores the electronic dictionary file in the buffer area of the second memory 135 when the size of the electronic dictionary file does not exceed the buffer size assigned to the second memory 133, thereby providing the electronic dictionary service upon request of the user. Therefore, the second controller 130 drives the sub-memory 135 only once in order to access the file. Then, the file is processed in an internal memory so that the file data can be rapidly processed. In addition, since the sub-memory 135 is driven only once, power consumption of the portable terminal can be minimized and the waiting time of the user required for receiving the service of the selected file data can be reduced. Although the electronic dictionary function has been described as an example, the above procedure can be performed when the size of the image file, music file or multimedia file selected by the user does not exceed the buffer size.

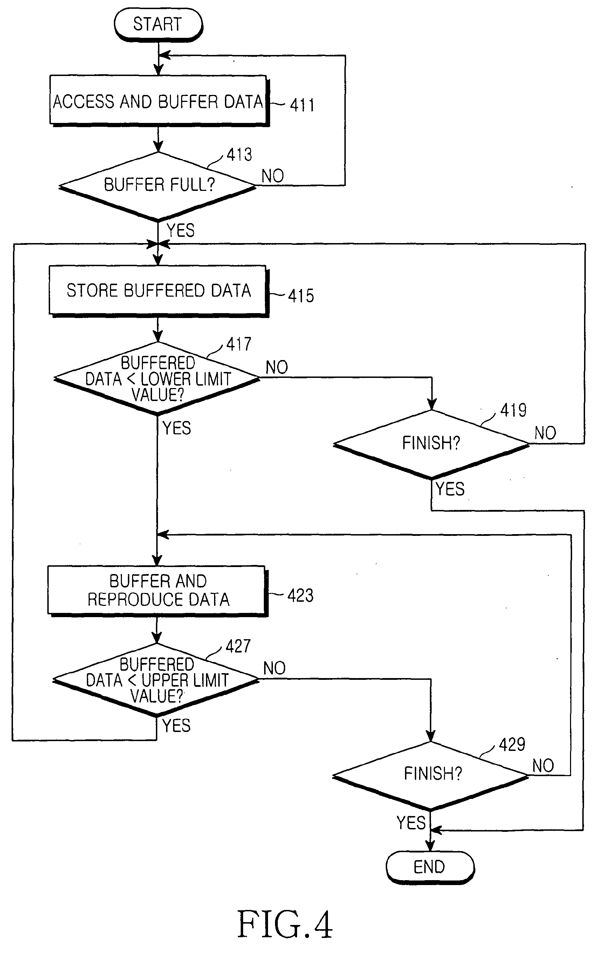

If it is determined at step 323 that the size of the selected file exceeds the buffer size, the second controller 130 processes the selected file while controlling quantity of data buffered in the buffer area of the second memory 133 at step 333. The file processing procedure of step 333 is shown in FIG. 4. The procedure shown in FIG. 4 has been prepared on the assumption that the buffer area is completely filled with the data at the starting point of accessing the data stored in the sub-memory 135 before reproducing the data. At this time, the upper and lower limit values of the buffer area are fixed to predetermined levels regardless of the type of the multimedia data.

Referring to FIG. 4, the second controller 130 accesses the data selected from the sub-memory 135 and stores the selected data in the buffer area of the second memory 133 at step 411. At this time, the size of the data stored in the buffer area of the second memory 133 is predetermined. The above buffering operation is repeatedly performed until the buffer area has been completely filled.

When the buffer area of the second memory 133 has been completely filled, the second controller 130 detects it at step 413 and stops an operation of the sub-memory 335, thereby closing the data buffering operation. Then, the second controller 130 outputs the data buffered in the buffer area of the second memory 133 to an I/O unit, thereby reproducing the data at step 415. The I/O unit includes the audio processing unit 143 when the data are music files, and includes the audio processing unit 143 and the main display section 141 when the data are moving picture files. In addition, when a speaker and the display section are connected to an external jack of the portable terminal, the I/O unit is connected to an external device. The above situation signifies that the buffered data are reproduced in a state in which the sub-memory 135 is not driven, so power consumption of the portable terminal can be reduced.

While processing the buffered data through the above procedure, the second controller 130 compares the data remaining in the buffer area of the second memory 133 with the predetermined lower limit value at step 417. At this time, if it is determined in step 416 that the data remaining in the buffer area of the second memory 133 is larger than the lower limit value, the procedure returns to step 415 so as to repeat the data reproduction process. In addition, when a closing command is generated while reproducing the data, the second controller 130 detects it in step 419 and finishes the data reproduction process.

However, if the data remaining in the buffer area becomes lower than the lower limit value while the buffered data are being reproduced, the second controller 130 detects it in step 417 so that the second controller 130 operates the sub-memory 135 in step 423 in order to access file data stored in the sub-memory 135 and to buffer the file data in the buffer area of the second memory 133. In addition, while buffering the file data of the sub-memory 135 in the buffer area of the second memory 133, the second controller 130 continuously reproduces the file data. The above situation signifies that the buffering and the reproducing operations for the file data of the sub-memory 135 are simultaneously performed.

The second controller 130 then compares the quantity of the data buffered in the buffer area of the second memory 133 with the predetermined upper limit value at step 427. At this time, if it is determined at step 427 that the quantity of the data buffered in the buffer area of the second memory 133 is less than the predetermined upper limit value and the process is not complete at step 429, the procedure returns to step 423 so as to repeatedly process the data buffered in the second memory 133 while driving the sub-memory 135. In addition, when a closing command is generated while reproducing the data, the second controller 130 detects it in step 429 and finishes the data reproduction process. However, if it is determined in step 427 that the quantity of the data buffered in the buffer area of the second memory 133 exceeds the predetermined upper limit value, the second controller 130 detects it and stops the operation of the sub-memory 135. Then, the procedure returns to step 415. The above situation signifies that the buffering operation of the sub-memory 135 is stopped and the reproducing operation for the file data stored in the sub-memory 135 is performed.

The access procedure for the sub-memory 135 can be intermittently and repeatedly performed according to the quantity of the data buffered in the buffer area of the second memory 133. In addition, when the user generates the closing command while the buffered file data are being processed through intermittently driving the sub-memory 135, the second controller 130 finishes the access procedure for the sub-memory 135 so that the data processing operation is finished.

In addition, when the second controller 130 accesses final data of the sub-memory 135, the second controller 130 detects it in step 419 or 429 so that data processing operation is finished. Herein, the final data signifies a final file of the data files selected by the user for reproducing the data. Thus, the second controller 130 reproduces the final data and finishes the data reproduction operation.

Hereinafter, a procedure for recording video or audio data and reproducing the video or audio data stored in the sub-memory 135 in a portable terminal including the sub-memory 135 according to the second embodiment of the present invention will be described in detail. According to the second embodiment of the present invention, the second controller 130 sets the buffer area of the second memory 133 according to the type of data and the buffer area of the second memory 133 is divided into a plurality of blocks. The size of the block of the buffer area may vary depending on the sort of data to be processed, such as video data, audio data, or information data. In addition, while processing the data, the second controller 130 compares the quantity of data buffered in the buffer area of the second memory with the predetermined lower and upper limit values in order to drive the file system. When the file system is driven, a driving section (HDD driver) of the sub-memory 135 is driven so that data having a block size are stored in the sub-memory 135 or the data are read out from the sub-memory 135.

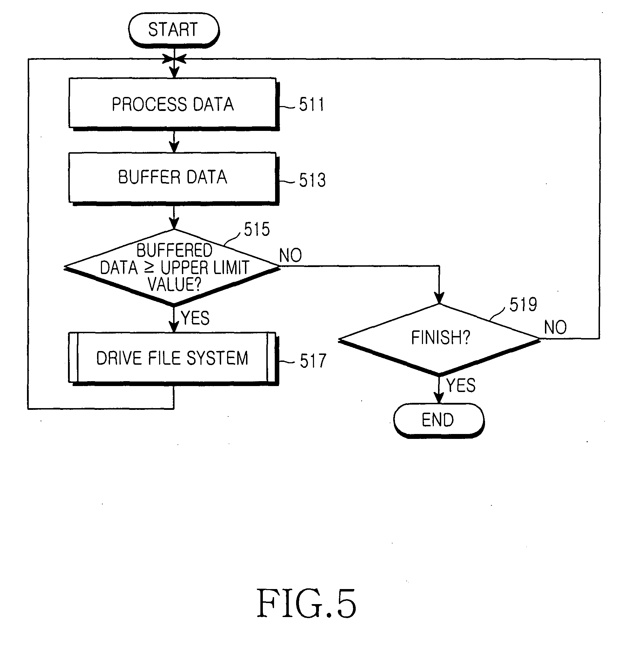

FIG. 5 is a flowchart illustrating a procedure for storing data in the sub-memory 135 of a portable terminal according to the second embodiment of the present invention. In the following description, the data stored in the sub-memory 125 are assumed to be video data photographed by the camera module 139. In addition, the second controller 130 processes the video data photographed by the camera module 139 and buffers the video data in the second memory 133. When the second memory 133 is filled with video data corresponding to the upper limit value, an internal file system is driven so as to store the video data in the sub-memory 135.

Referring to FIG. 5, in a recording mode, the second controller 130 controls the operation of the camera module 139 and receives video data from the camera module 139 so as to process the video data at step 511. At this time, the second controller 130 displays the video data of the camera module 139 in the main display section 141 while coding (for example, MPEG coding) the video data. In addition, the second controller 130 stores the coded video data in the buffer area of the second memory 133 at step 513. At this time, the size of the buffer area of the second memory 133 for buffering the data may vary depending on the video recoding data or audio recoding data. That is, since the quantity of the video data to be processed is larger than the quantity of the audio data to be processed, the size of the buffer area of the second memory 133 must be changed according to the size of the data to be buffered. While buffering the video data, the second controller 130 checks whether the quantity of data buffered in the buffer area of the second memory 133 reaches the upper limit value at step 515. If the quantity of data buffered in the buffer area of the second memory 133 reaches the upper limit value, the second controller 130 detects it at step 515 and drives the file system in step 517 so as to shift the data stored in the buffer area of the second memory 133 into the sub-memory 135.

When the file system is driven in sep 511, the HDD driver of the sub-memory 133 is also driven so that the data having a block size stored in the buffer area of the second memory 133 are output to the TIC 137. Upon receiving the data from the second memory 133, the TIC 137 stores the data in the sub-memory 135. At this time, a speed of data being stored in the sub-memory by means of the file system is significantly faster than a speed of data being buffered in the second memory 133. Accordingly, when the file system has been driven, the data stored in the buffer area of the second memory 133 is shifted into the sub-memory 135, so the data having the block size stored in the buffer area of the second memory 133 are stored in the sub-memory 135. After shifting the data having the block size into the sub-memory 135, the file system is turned off and waits for the next operation.

Thus, the second controller 130 buffers the data in the second memory 133 while processing the data photographed by the camera module 139, and drives the file system when the data buffered in the second memory 133 reaches the upper limit value. While the file system is being driven, the second controller 130 buffers the data of the camera module 139 in the second memory 133 separately from the file system. In addition, the file system accesses the data having the block size stored in the second memory 133 so as to store the data in the sub-memory 135. When the data having the block size have been stored in the sub-memory 135, the file system is turned off and waits for the next operation.

The above procedure may be repeated until the recording operation has been completed by the user. That is, if the user generates the closing command, the second controller 130 detects it in step 519 and finishes the recording operation.

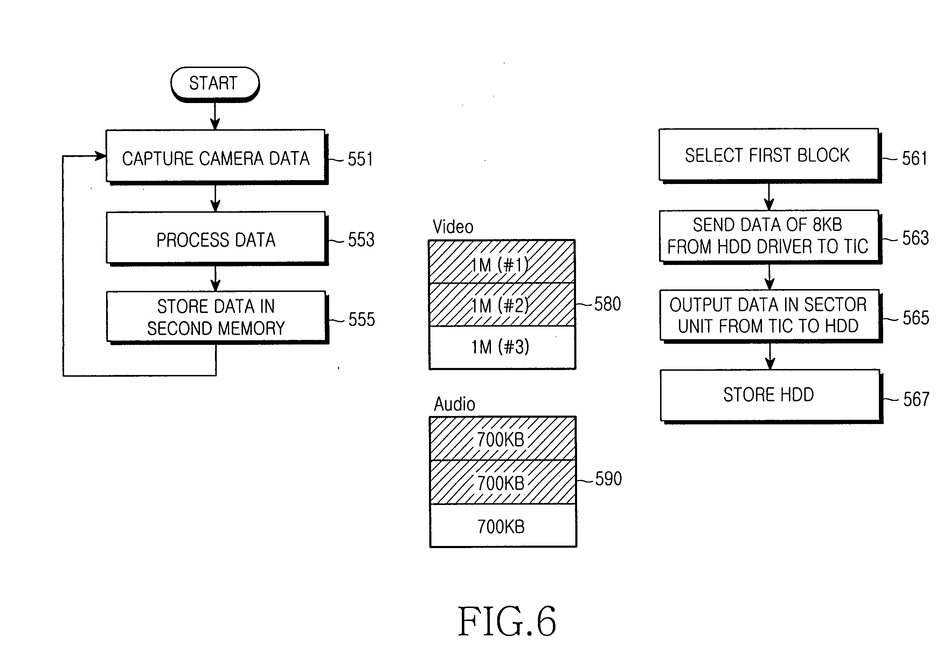

FIG. 6 is a flowchart illustrating the operation of the file system shown in FIG. 5 in detail. Herein, the data are assumed as video data.

Referring to FIG. 6, when the recoding mode is started, the second controller 130 drives the camera module 139 and performs steps 551 to 555 so as to capture, process and store the video data photographed by the camera module 139. At this time, the second controller 130 displays the processed video data in the main display section 141 while storing the processed video data in the buffer area of the second memory 133. Reference numeral 580 or 590 illustrates the buffer area assigned to the second memory 133. According to the second embodiment of the present invention, the buffer area 580 or 590 assigned to the second memory 133 includes three blocks. At this time, the size of each block comprising the buffer area depends on the type of data to be processed. In a case of video data, the block has a size of 1MB. In addition, in a case of audio data, the block has a size of 700KB. According to the second embodiment of the present invention, if data are stored in two blocks of the buffer area, it is assumed that the data correspond to the upper limit value. In addition, if data are stored in one block of the buffer area, it is assumed that the data correspond to the lower limit value.

Therefore, the second controller 130 stores the video data photographed by the camera module 139 until the data have been buffered in two blocks of the buffer area of the second memory 133 at step 555. When the data have been buffered in two blocks of the buffer area of the second memory 133, the second controller 130 detects it and drives the file system. In addition, after driving the file system, the second controller 130 processes the video data photographed by the camera module 139 while performing steps 551 to 555, thereby storing the video data in the blocks of the buffer area. For example, if the video data are buffered in first and second blocks #1 and #2 of the buffer area 580, the second controller 130 drives the file system and buffers the video data in a third block #3.

Thus, the file system stores the data of first block #1 in the sub-memory 135. Hereinafter, a procedure for storing the data of the second memory 133 in the sub-memory 135 by means of the file system will be described. First, the file system selects the block of the buffer area of the second memory 133 in order to store data of the block in the sub-memory 135 at step 561. Then, the HDD driver of the sub-memory 135 outputs the data of the selected block in a segment unit to the TIC 137 at step 563. Herein, a size of the segment is assumed to be 16 sectors. Upon receiving the data of the segment unit from the HDD driver of the sub-memory 135, the TIC 137 outputs the data to the sub-memory 135 in a sector unit at step 565. Thus, the sub-memory 135 stores the data of sector units therein at step 567. After transmitting all of the segment data to the sub-memory 135, the TIC 137 notifies the HDD driver of the sub-memory 135 of the transmission of the segment data so as to allow the HDD driver of the sub-memory 135 to output the next segment data. The data buffered in the selected block may be stored in the sub-memory 135 while repeating the above procedures. At this time, if the data of the selected block of the second memory 133 have been completely stored in the sub-memory 133, the file system notifies it to the second controller 130, so the second controller 130 stops the operation of the file system.

Accordingly, the second controller 130 may recognize that the data of the first block #1 of the buffer area have been stored in the sub-memory 133, so the second controller 130 processes the video data photographed by the camera module 139 and stores the video data in the third block #3 of the buffer area of the second memory 133. At this time, if the data have been buffered in the third block #3 of the buffer area of the second memory 133, the second controller 130 again drives the file system so that the video data are buffered in the first block #1 of the buffer area. Thus, the file system stores the data buffered in the second block #2 of the buffer area in the sub-memory 135.

Therefore, when storing the data in the sub-memory 135, the buffer area is divided into several block units and the sub-memory 135 is driven when the selected block is filled with data, thereby storing the data having the block size in the sub-memory 135. In addition, when the second controller 130 buffers remaining block data, the operation of the sub-memory 135 is temporarily stopped. Accordingly, the sub-memory 135 and driving units for driving the sub-memory 135 are discontinuously driven, so that power consumption of the portable terminal can be reduced.

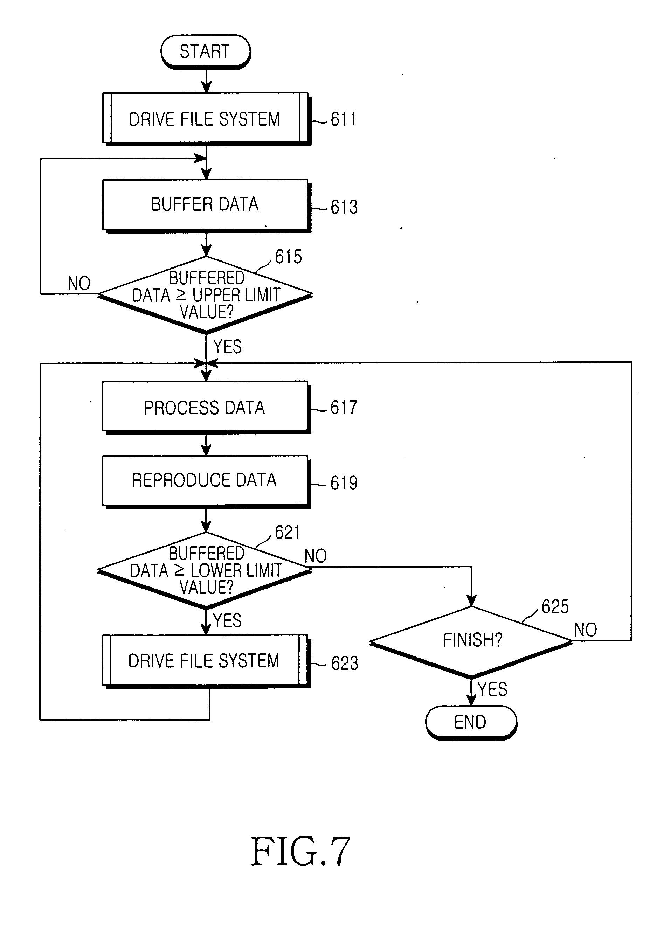

FIG. 7 is a flowchart illustrating a procedure of accessing and processing data stored in the sub-memory 135 according to one embodiment of the present invention.

Referring to FIG. 7, when the user selects a reproduction mode, the second controller 130 drives the file system so that the file list stored in the sub-memory 135 is displayed in the main display section 141. At this time, when the user selects one of the files included in the file list, the second controller 130 drives the file system so as to access the selected file at step 611. At step 611, the file system allows the second controller 130 to access the selected file stored in the sub-memory 135. When an initial data access is requested, the file system accesses and outputs the data corresponding to the upper limit value of the buffer area assigned to the second memory 133. In addition, the second controller 130 buffers the file data in the buffer area of the second memory 133 at step 613. Then, the second controller 130 waits for a predetermined period of time until the data have been buffered corresponding to the upper limit value of the buffer area of the second memory 133.

In this state, the second controller 130 checks the quantity of data buffered in the second memory 130. If the size of the data reaches the upper limit value, the second controller 130 detects it at step 615 so that the second controller 130 processes and reproduces the buffered data through steps 617 and 619. In addition, while processing and reproducing the buffered data, the second controller 130 checks the size of the buffered data of the second memory 133 at step 621. If the size of the buffered data reaches the lower limit value at step 621, the second controller 130 drives the file system at step 623 and returns to step 617 in order to repeat the data processing and reproducing operations. At this time, the file system accesses the sub-memory 135 in order to output data corresponding to the upper limit value of the buffer area according to the driving command of the second controller. If the size of the buffered data does not reach the lower limit value at step 621, the method proceeds to step 625. At step 625, a determination is made as to whether the process is complete. If the process is complete, the process ends. If the process is not complete, the method returns to step 617.

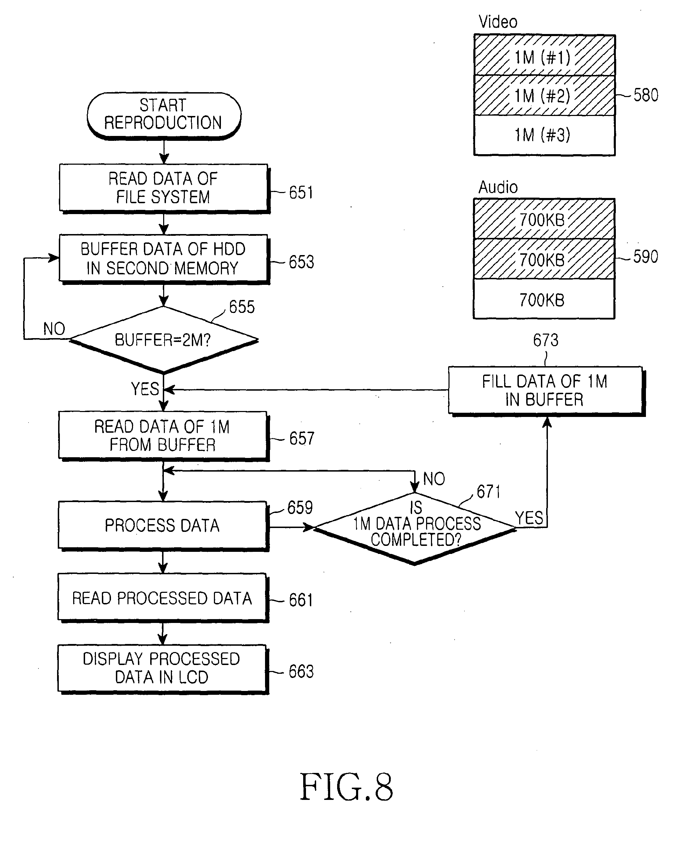

FIG. 8 is a flowchart for explaining the procedure shown in FIG. 7 according to the second embodiment of the present invention. It is assumed that the buffer area assigned to the second memory 133 is identical to the buffer area described with reference to FIG. 6. In FIG. 8, a buffer area 580 is used for buffering the video data and a buffer area 590 is used for buffering the audio data. As shown in FIG. 8, the buffer area assigned to the second memory 133 includes three blocks in which a data value buffered in two blocks are assumed as the upper limit value and a data value buffered in one block is assumed as the lower limit value.

Referring to FIG. 8, when the user selects a reproduction mode, the second controller 130 drives the file system in order to access a selected file at step 651. Thus, the file system accesses and outputs two block data of the file selected from the sub-memory 135, and then, the operation of the file system is stopped. After driving the file system in step 651, the second controller 130 controls the file system in such a manner that data output from the sub-memory 135 are buffered in the buffer area of the second memory 133 and checks the size of the data buffered in the buffer area at step 653. If the size of the data buffered in the buffer area reaches the upper limit value (that is, 2MB : two block data), the second controller 130 detects it at step 655 and accesses data of one block in the buffer area of the second memory 133 at step 657. In addition, the data of one block are processed through steps 659 to 663 and displayed in the main display section 141. The second controller 130 does not drive the file system when completing the data process of one block. That is, the second controller 130 may process the data of one block and checks whether the data process has been completed at step 671. If it is determined in step 671 that data process has been completed, the second controller 130 drives the file system. Thus, the file system accesses and outputs data of the next block stored in the sub-memory 135 at step 673. The above procedure may be repeated until the file reproduction process has been completed or the user generates the closing command.

Herein, if one block has a size of 1MB, the second controller 130 drives the file system when the reproduction mode is started. Thus, the file system accesses and outputs 2MB data of the selected file and the second controller 130 stores the 2MB data output by means of the file system in the first and second blocks #1 and #2 of the buffer area of the second memory 133. When the 2MB data have been buffered in the first and second blocks #1 and #2 of the buffer area of the second memory 133, the second controller 130 detects that the data have been buffered corresponding to the upper limit value, so the second controller 130 accesses and processes the data of the first block #1. When the data of the first block #1 have been processed, the second controller 130 drives the file system and accesses and processes the data of the second block #2. The file system then accesses and processes the data of the next block stored in the sub-memory 135. The data of the next block are stored in the third block #3 of the buffer area. The above procedure may be repeated until the user generates the closing command. Therefore, while the data of one block are being processed by means of the second controller 130, the file system accesses the data of the next bock stored in the sub-memory 135 and stores the data in the buffer area of the second memory 133. In addition, the file system accesses the data of one block stored in the sub-memory 135 and stores the data in the second memory 133. After that, the operation of the HDD driver of the sub-memory 135 is stopped until the second controller 130 has processed the block data. Accordingly, the buffering operation for shifting data of the sub-memory 135 into the second memory 133 is discontinuously performed, so power consumption of the portable terminal can be reduced.

As described above, when accessing the data of the sub-memory in the portable terminal employing the disc unit, such as a DVD, a CD or a hard disc, as the sub-memory, the second controller buffers the data while intermittently controlling the sub-memory, thereby reproducing the data. Thus, power consumption of the portable terminal can be minimized because the second controller intermittently accesses the sub-memory. In addition, since the disc unit is discontinuously driven, life span of the portable terminal can be expanded. Furthermore, when accessing the sub-memory of the portable at an initial stage, the data access may be performed after the portable terminal has been placed in a stable position, so the disc unit can be protected even if external impact is applied to the portable terminal.

While the invention has been shown and described with reference to certain embodiments thereof, it should be understood by those skilled in the art that various changes in form and details may be made therein without departing from the spirit and scope of the invention as defined by the appended claims.

## Claims

1. A method of accessing and processing a file stored in a sub-memory of a portable terminal including the sub-memory and an internal memory capable of storing mass storage data in which the internal memory has a buffer for accessing and buffering the file selected from the sub-memory, the method comprising the steps of:
storing a file system menu of the sub-memory in the internal memory during a boot-up operation;
displaying the file system menu stored in the internal memory when shifting into a file access mode for the sub-memory from a waiting mode;
accessing file data selected from the file system menu of the sub-memory and buffering the file data in the buffer of the internal memory until the file data have a size corresponding to a predetermined upper limit value;
processing the buffered file data;
buffering data of the sub-memory in the buffer until the data have a size corresponding to the upper limit value when quantity of buffered data becomes lower than a predetermined lower limit value while processing the buffered file data; and
repeating data processing and buffering procedures until a closing command is generated.

2. The method as claimed in claim 1, wherein the upper limit value has a size corresponding to 2/3 of the buffer and the lower limit value has a size corresponding to 1/3 of the buffer.

3. A method of accessing and processing a file stored in a sub-memory of a portable terminal including the sub-memory as an external memory and an internal memory having a buffer for accessing and buffering the file selected from the sub-memory, the method comprising the steps of:
storing a file system menu of the sub-memory in the internal memory during a boot-up operation;
displaying the file system menu stored in the internal memory when shifting into a file access mode for the sub-memory from a waiting mode;
checking whether a size of the file selected from the file system menu is adapted to be buffered in the buffer;
accessing the selected file stored in the sub-memory and buffering the selected file in the buffer of the internal memory if the selected file has a size adapted to be buffered in the buffer;
processing the file buffered in the buffer when the buffering step is completed;
accessing the selected file stored in the sub-memory and buffering the selected file in the buffer of the internal memory if the selected file has a size exceeding a size of the buffer;
processing the buffered file data;
continuously processing the buffered file data and driving the sub-memory in order to buffer data of the sub-memory in the buffer if quantity of the buffered file data becomes equal to or lower than a predetermined lower limit value while processing the buffered file data; and
stopping a file access step for the sub-memory and returning to the buffered file processing step if quantity of the buffered file data corresponds to a predetermined upper limit value while processing the buffered file data.

4. A method of storing data in a portable terminal including a sub-memory and a main memory capable of storing mass storage data in which the main memory has a buffer area including a plurality of blocks, the method comprising the steps of:
assigning the buffer area to the main memory in a data storage mode;
processing input data and buffering the processed data in the buffer area of the main memory;
driving a file system when the data have buffered corresponding to the upper limit value of the buffer area, buffering the processed data in a next block of the buffer area, selecting a block of the buffer area, in which the data are primarily buffered, by means of the file system, and storing the data being buffered in the selected block in the sub-memory ; and
repeating the above steps until a closing command is generated.

5. The method as claimed in claim 4, wherein the buffer area includes three blocks, it is determined as the upper limit value if the data are buffered in two blocks of the buffer area, and it is determined as the lower limit value if the data are buffered in one block of the buffer area.

6. The method as claimed in claim 5, wherein a size of the block of the buffer area depends on a sort of data to be processed.

7. A method of storing data in a portable terminal including a sub-memory and a main memory capable of storing mass storage data in which the main memory has a buffer area including a plurality of blocks, the method comprising the steps of:
displaying files stored in the sub-memory in a data reproduction mode and assigning the buffer area to the main memory when a file is selected from the files;
driving a file system so as to buffer the data until the data have buffered corresponding to an upper limit block of the buffer area of the main memory;
processing the buffered data, driving the file system when the buffered data are processed corresponding to the lower limit block of the buffer area, and buffering data of the sub-memory corresponding to the upper limit block of the buffer area by means of the file system; and
repeating the above steps until a closing command is generated.

8. The method as claimed in claim 7, wherein the buffer area includes three blocks, it is determined as the upper limit value if the data are buffered in two blocks of the buffer area, and it is determined as the lower limit value if the data are buffered in one block of the buffer area.

9. The method as claimed in claim 8, wherein a size of the block of the buffer area depends on a sort of data to be processed.

10. A method of processing a file stored in a sub-memory capable of storing mass storage data in a portable terminal including the sub-memory and a buffer for buffering data of the sub-memory, the method comprising the steps of:
displaying a menu of a file system of the sub-memory in a data reproduction mode;
selecting a file from the menu, accessing the selected file stored in the sub-memory, and buffering the selected file in the buffer of an internal memory with a predetermined size; and
processing the file buffered in the buffer.

11. The method as claimed in claim 10, wherein the step of buffering the data of the sub-memory in the internal memory includes the substeps of accessing the selected file stored in the sub-memory, buffering the selected file corresponding to an upper limit value of the buffer of the internal memory, stopping the buffering for the selected file when the selected file has been buffered corresponding to the upper limit value of the buffer, and restarting the buffering for the selected file when quantity of the buffered data become lower than a predetermined lower limit value.

12. The method as claimed in claim 11, wherein the upper limit value of the buffer has a size corresponding to 2/3 of the buffer and the lower limit value of the buffer has a size corresponding to 1/3 of the buffer.

13. The method as claimed in claim 10, further comprising the step of storing the file system menu of the sub-memory in the internal memory during a boot-up operation.

14. The method as claimed in claim 10, wherein the step of buffering the data of the sub-memory in the buffer includes the substeps of buffering data corresponding to a number of upper limit blocks in the buffer, stopping the buffering when data corresponding to the number of upper limit blocks have been buffered, and restarting the buffering when data corresponding to a number of a lower limit block have been buffered.

15. The method as claimed in claim 14, wherein the buffer area includes three blocks, it is determined as the upper limit value if the data are buffered in two blocks of the buffer area, and it is determined as the lower limit value if the data are buffered in one block of the buffer area.

16. The method as claimed in claim 15, wherein a size of the block of the buffer area depends on a sort of data to be processed.

17. A method of processing a file stored in a sub-memory capable of storing mass storage data in a portable terminal including the sub-memory and a buffer for buffering data of the sub-memory, the method comprising the steps of:
buffering processed data in the buffer during a data storage mode of the sub-memory;
storing the data in the sub-memory when the data corresponding to a predetermined upper limit value have been buffered in the buffer, and stopping the storing operation for the data when the data buffered in the buffer has a size corresponding to a predetermined lower limit value; and
repeating the above steps if the data buffered in the buffer have a size corresponding to the upper limit value until a data processing procedure is finished.

18. The method as claimed in claim 17, wherein the step of buffering the buffered data in the sub-memory includes the substeps of buffering the processed data in the buffer until the buffered data correspond to a number of upper limit blocks in the buffer, storing the buffered data in the sub-memory when the data corresponding to the number of upper limit blocks have been buffered, and stopping the storing operation for the data when the buffered data correspond to a number of a lower limit block.

19. The method as claimed in claim 14, wherein the buffer area includes three blocks, it is determined as the upper limit value if the data are buffered in two blocks of the buffer area, and it is determined as the lower limit value if the data are buffered in one block of the buffer area.

20. The method as claimed in claim 19, wherein a size of the block of the buffer area depends on a sort of data to be processed.
